# FASCICULE DE BREVET EUROPEEN

(11) **EP 3 254 006 B1**
(45) Date de publication et mention de la délivrance du brevet: **17.06.2020**
(21) Numéro de dépôt: 16705455.0
(22) Date de dépôt: 04.02.2016
(51) Int. Cl.: F16K 27/02, F02D 9/10, F16K 31/04, F02M 26/53

(54) **VANNE ELECTRO-COMMANDEE POUR FLUIDE CHAUD**
ELEKTRISCH GESTEUERTES VENTIL FÜR HEISSE FLÜSSIGKEIT
ELECTRICALLY CONTROLLED VALVE FOR HOT FLUID

(30) Priorité: 04.02.2015 FR 1550882
(43) Date de publication de la demande: 13.12.2017
(73) Titulaire: MMT SA, 6304 Zug (CH)
(72) Inventeur: SIGG, Daniel, 2605 Sonceboz-Sombeval (CH); GRAF, Philip, 2605 Sonceboz-Sombeval (CH)
(74) Mandataire: IP Trust
(86) Numéro de dépôt international: PCT/EP2016/052442
(87) Numéro de publication internationale: WO 2016/124720

(56) Documents cités:
- EP-A2- 1 431 638
- WO-A1-2013/021133
- CH-A5- 579 713
- DE-A1- 4 302 666
- DE-A1- 10 344 218
- US-B2- 6 598 619
- US-B2- 8 480 054

## Description

### Domaine de l'invention

La présente invention concerne le domaine des vannes électromagnétiques pour des fluides chauds. Elle concerne plus particulièrement des vannes pour des applications automobiles, notamment des vannes de recirculation de gaz d'échappement. Elle n'est toutefois pas limitée à des applications automobiles et concerne plus généralement des vannes pour commander la circulation de fluides gazeux ou éventuellement liquides, à des températures élevées, typiquement à plus de 200°C, et pouvant atteindre, pour des gaz d'échappement, 700°C.

### Etat de la technique antérieur

On connaît dans l'état de la technique une première famille de solutions où la liaison entre l'arbre de commande de l'organe d'obturation de la vanne, et l'actionneur, se fait par l'intermédiaire de leviers permettant de créer une isolation thermique par la distance entre la vanne soumise à des températures très élevées, et l'actionneur dont la température doit rester modérée. Ces solutions présentent de nombreux inconvénients. Elles impliquent l'utilisation de nombreuses pièces mécaniques pour assurer la transmission. Ces pièces sont soumises à des températures élevées, entraînant des dilatations difficiles à maîtriser. Elles se traduisent aussi par une usure accélérée, résultant des efforts radiaux s'exerçant sur les éléments de transmission. La demande EP2044354 présente un exemple de réalisation.

Une deuxième famille de solution prévoit une liaison mécanique directe entre l'organe d'obturation et l'arbre de sortie de l'actionneur, et des moyens de refroidissement permettant de maintenir la température de l'actionneur à des conditions compatibles avec les contraintes des composants électroniques et électromécaniques. Par contre, ces solutions évitent les inconvénients exposés pour la première famille de solution.

Les solutions de l'art antérieur, notamment celles prévoyant une liaison mécanique directe entre l'organe d'obturation et l'actionneur, présentent un inconvénient lié aux contraintes antinomiques sur le plan mécanique et sur le plan thermique. La demande de brevet WO2012038351 décrit à ce titre une vanne papillon piloté par un motoréducteur.

Pour assurer un couplage mécanique satisfaisant, permettant de transmettre le couple de rotation sans jeu, et de manière fiable, on utilise un axe commun à l'actionneur et à l'organe d'obturation, ou deux axes alignés et emboités, par exemple accouplés par une liaison rigide, par exemple des arbres cannelés. La conséquence est une transmission thermique élevée, et le transfert de la chaleur de la vanne vers l'actionneur. Pour compenser cet effet, on a cherché dans l'art antérieur à refroidir une partie de l'actionneur, par exemple par un circuit de refroidissement.

Beaucoup de solutions de l'art antérieur visent à augmenter la transmission de chaleur venant de la vanne vers des zones refroidies de l'actionneur, qui permettent d'évacuer la chaleur.

Ces solutions conduisent à des compromis peu satisfaisants : en effet, la vanne est conçue pour fonctionner à des températures nominales élevées, et la liaison thermique avec des zones refroidies ne présente peu d'intérêt, dans la mesure où le fluide circule à sa température nominale. Elles entraînent aussi des gradients thermiques élevés, dans un espace relativement réduit, entre le fluide chaud et le circuit de refroidissement.

Afin de concilier une liaison mécanique efficace avec un isolement thermique, on a proposé dans l'état de la technique une vanne décrite dans la demande de brevet US2008017816. Ce brevet décrit une vanne d'échappement comprend un corps de soupape, une soupape supportée par un arbre à l'intérieur du corps de soupape, et un actionneur qui entraîne l'arbre pour déplacer la valve par rapport au corps de soupape.

Le brevet US8480054 décrit une autre solution connue d'accouplement d'arbre rigide en torsion et thermiquement isolant, avec de multiples degrés de liberté pour autoriser le désalignement.

Le dispositif d'accouplement permet de réduire le transfert de chaleur et d'isolation de vibrations entre l'actionneur et la vanne.

Le dispositif d'accouplement comprend généralement un arbre d'accouplement accouplé en rotation à ses extrémités opposées aux arbres d'entrée et de sortie par des mécanismes à ressort de torsion.

Les mécanismes à ressort de torsion comprennent des étriers de blocage en rotation de l'arbre d'accouplement des arbres d'entrée et de sortie. Les mécanismes à ressort de torsion permettent une gamme limitée de déplacement axial et de pivotement entre l'arbre d'accouplement et des arbres d'entrée et de sortie et sont pré-chargés pour éviter l'hystérésis de rotation de la vanne.

Le brevet américain US6598619 décrit également une soupape qui comprend un élément de fermeture, un dispositif à force motrice, un élément d'accouplement, et un élément d'espacement.

Le corps définit un passage d'écoulement qui est disposé le long d'un axe longitudinal. L'élément de fermeture est disposé dans le passage d'écoulement et comprend un premier arbre qui se prolonge le long d'un premier axe qui est oblique par rapport à l'axe longitudinal.

L'élément de fermeture peut tourner sur le premier axe entre une première position qui empêche sensiblement l'écoulement à travers le passage d'écoulement et une seconde position qui permet généralement écoulement à travers le passage d'écoulement.

Le moteur fait tourner l'élément de fermeture entre la première position et la seconde position, et comprend un second arbre qui peut tourner sur un deuxième axe.

L'élément de couplage reliant les premier et second arbres pour transmettre la rotation du dispositif à l'élément de fermeture. L'élément de couplage est élastique par rapport aux premier et second arbres. L'élément d'espacement isole le dispositif par rapport à la paroi, et définit en général un volume qui contient l'élément d'accouplement.

On connaît aussi les brevets PCT WO2013/021133 décrivant un dispositif de dosage comprenant un corps de vanne muni d'un clapet adapté pour se déplacer entre une position de fermeture et une position d'ouverture, un axe de transmission ayant une première extrémité reliée au clapet et une seconde extrémité reliée à un élément de came, un actionneur électrique rotatif comprenant un ensemble statorique et un ensemble rotorique rotatif autour d'un axe de rotation. L'ensemble rotorique comprend une culasse magnétique portant un aimant rotorique et en outre un galet fixé sur la culasse magnétique excentré par rapport à l'axe de rotation et mobile dans l'élément de came de sorte à transformer le mouvement rotatif de l'ensemble rotorique en un mouvement de l'axe de transmission.

On connaît encore la demande de brevet allemand DE10344218 ou EP 1431638 décrivant d'autres solutions de l'art antérieur.

### Inconvénient de l'art antérieur

Les inconvénients de ces solutions connues est que la transmission thermique est certes réduite au niveau des axes, mais subsistent par les liaisons entre le corps de l'actionneur et le corps de la vanne. Ces deux parties sont reliées par des boulons et par des surfaces adjacentes assurant un couplage thermique.

Si au contraire, la vanne et l'actionneur sont éloignés, le problème est celui de l'encombrement de l'ensemble. Pour permettre une bonne intégration dans un véhicule, il est nécessaire que la vanne soit compacte et ne présente pas deux parties distinctes éloignées l'une de l'autre. L'homme du métier est donc confronté à un dilemme : pour répondre à la contrainte thermique, il est conduit à éloigner la vanne où circulent les gaz chaud de l'actionneur électromagnétique.

Mais pour répondre à la contrainte de compacité, il est au contraire conduit à rapprocher ces deux parties.

### Solution apportée par l'invention

L'invention vise à résoudre ces problèmes en prenant le contrepied des solutions de l'art antérieur. Elle vise non pas à gérer la conduction thermique entre la vanne et le circuit de gaz chauds, et une zone refroidie liée de manière rigide, mais à dissocier ces deux zones tout en préservant un couplage mécanique efficace et robuste, avec une compacité.

Elle permet ainsi d'optimiser la conception de la vanne d'une part, et de la partie actionneur d'autre part. La vanne est conçue pour fonctionner à des températures élevées, sans que l'on cherche à la refroidir ni même à empêcher absolument les fuites de fluides chauds.

L'actionneur, de son côté, est conçu pour fonctionner à une température nominale compatible avec ses composants électroniques, magnétiques et électriques, sans qu'il ne soit nécessaire d'organiser la transmission des calories venant du couplage thermique avec la vanne par un axe commun.

L'un des buts essentiels de l'invention est de concilier le découplage thermique, la robustesse de la transmission du couple et la compacité de l'ensemble formé par l'actionneur et la vanne.

A cet effet, l'invention concerne selon son acception la plus générale une vanne de circulation de fluides chauds électro-commandée constituée d'un actionneur électromagnétique et d'une vanne, ladite vanne présentant un orifice muni d'un organe d'obturation mobile entraîné par un arbre de rotation perpendiculaire à l'axe dudit orifice, ledit actionneur électromagnétique entraînant la rotation dudit arbre, l'arbre de sortie dudit actionneur étant sensiblement coaxial avec ledit arbre de rotation, l'extrémité frontale de l'arbre de rotation et l'extrémité frontale de l'arbre de sortie ne sont pas en contact direct, l'accouplement entre ledit arbre de rotation de la vanne et ledit arbre de sortie de l'actionneur est assuré par un organe d'accouplement placé entre l'extrémité frontale dudit arbre de sortie et l'extrémité frontale dudit arbre, ledit organe d'accouplement présentant des moyens de transmission de couple de rotation avec une tolérance de désalignement entre l'arbre de sortie d'une part et l'arbre de rotation de la vanne d'autre part, ladite vanne étant caractérisée par des moyens de liaison mécaniques isolants thermiquement entre des zones périphériques du corps de l'actionneur et le corps de la vanne, et en ce que l'organe d'accouplement est constitué d'une première pièce de section transversale fixée à l'extrémité de l'un desdites arbres, sans que la forme de la section soit limitative, engagée dans une rainure transversale formée dans une seconde pièce complémentaire fixée à l'extrémité de l'autre desdites arbres. La première pièce et/ou la seconde pièce sont réalisées en un matériau isolant thermiquement. Leurs forme et section peut varier mais la seconde pièce, reliant l'arbre portant l'organe d'obturation, est de section transversale pleine, cette section étant avantageusement inscrite dans un diamètre significativement supérieur (au moins deux fois supérieur et typiquement trois fois supérieur) à celui de l'arbre portant l'organe d'obturation, afin de former une barrière thermique efficace aux gaz chauds pouvant remonter par l'arbre portant l'organe d'obturation.

On entend par « section inscrite », une section de forme extérieure quelconque, préférentiellement circulaire, ayant plusieurs points, préférentiellement tous ses points, de tangence avec le diamètre dans lequel elle est inscrite.

On entend par «isolant thermiquement » une conductivité thermique inférieure à 30 (W·m⁻¹·K⁻¹). A titre d'exemple non limitatif, on pourra choisir de l'acier inoxydable (18 % Chrome, 8 % Nickel) ou bien encore de la céramique.

Selon une variante, la vanne comporte au moins une tôle, ou plaque, placée entre la surface frontale de la vanne et la surface frontale de l'actionneur.

Avantageusement, elle comporte au moins deux tôles séparées par une lame d'isolant, placées entre la surface frontale de la vanne et la surface frontale de l'actionneur.

Selon une première variante de réalisation, ledit organe d'accouplement est réalisé en acier inoxydable.

Selon une deuxième variante, ledit organe d'accouplement est réalisé en céramique.

Selon une troisième variante, ledit organe d'accouplement est un joint de Oldham.

Avantageusement, l'actionneur présente au moins trois zones de liaison périphériques pour la fixation sur la vanne.

Selon un mode de réalisation préférentiel, ledit organe d'accouplement présente une surface discale de déflexion dirigée vers la surface frontale de la vanne.

### Description détaillée d'un exemple non limitatif de réalisation

La présente invention sera mieux comprise à la lecture de la description qui suit concernant un exemple non limitatif de réalisation d'une vanne de circulation selon l'invention, se référant aux dessins annexés où :
- la figure 1 représente une vue en coupe d'un premier exemple de réalisation,
- la figure 2 représente une vue en perspective du premier exemple de réalisation,
- la figure 3 représente une vue en coupe d'un deuxième exemple de réalisation,
- la figure 4 représente une vue en perspective d'un troisième exemple de réalisation,

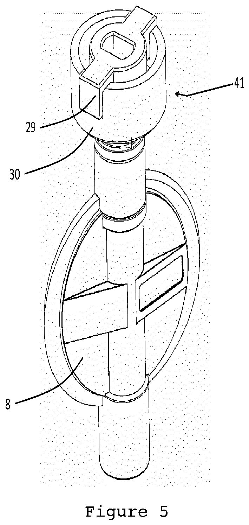

- la figure 5 représente une vue isolée de l'organe d'accouplement avec l'organe d'obturation.

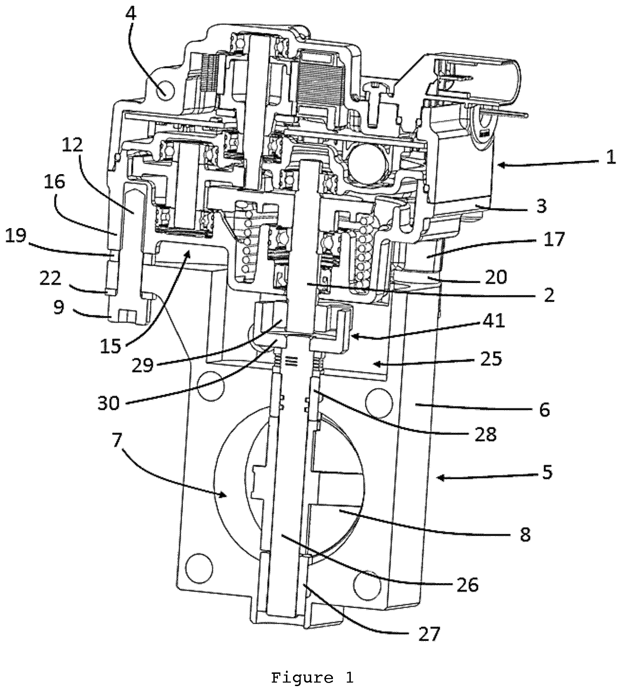

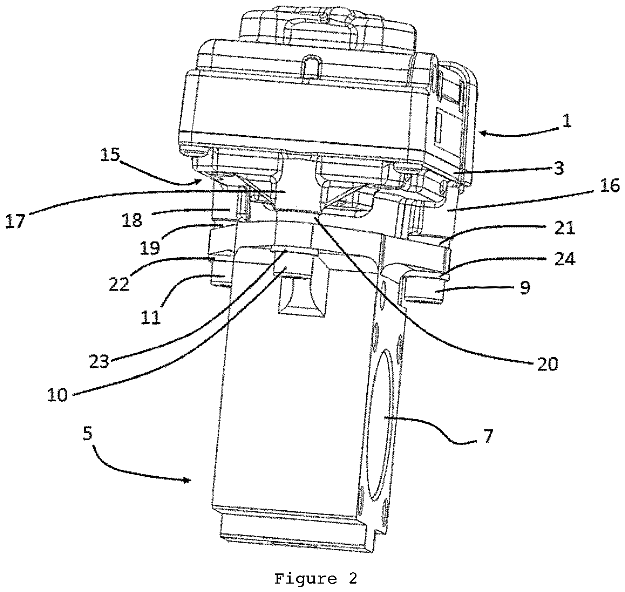

La vanne décrit en référence aux figures 1 et 2 comporte de manière connue actionneur électromagnétique (1) assurant le déplacement angulaire d'un arbre (2) métallique. Dans l'exemple décrit, reprenant un exemple de réalisation d'une vanne de recirculation de gaz d'échappement, l'actionneur (1) comprend un corps avant (3) métallique, par exemple en moulage d'aluminium ou en alliage assurant une bonne conduction thermique. Ce corps avant (3) présente des cavités (4) pour la circulation d'un fluide caloporteur permettant d'assurer le refroidissement de l'actionneur.

La vanne (5) comprend un corps de vanne (6) métallique définissant un orifice (7) qui peut être obturé par un organe d'obturation (8). Cet organe d'obturation (8) est commandé en rotation par un arbre d'entraînement (26). Cet arbre (26) est guidé par un palier avant (27) et un palier arrière (28) étanchéifié.

La liaison mécanique entre l'actionneur (1) et la vanne (5) est assuré par trois vis (9, 10 et 11) s'engageant dans des taraudages filetés (12 à 14) prévus sur le corps avant (3) de l'actionneur (1).

La surface frontale avant (15) du corps de l'actionneur (1) présente trois protubérances annulaires (16 à 18) entourant le débouché des taraudages filetés (12 à 14). Ces protubérances annulaires (12 à 14) permettent de réduire les surfaces de contact entre le corps (3) de l'actionnaire (1) et le corps de la vanne (5) et donc de réduire la conduction thermique.

Pour réduire encore la conduction thermique entre le corps de la vanne (5) et le corps de l'actionneur (1), des rondelles d'isolation thermiques (19 à 21) sont interposées entre lesdites protubérances annulaires (12 à 14) et le corps de la vanne (5). De même des rondelles d'isolation thermiques (22 à 24) sont interposées entre le corps de la vanne (5) et les têtes des vis (9 à 11).

Ces rondelles isolantes sont par exemples des rondelles céramiques ou verre-époxy, ou bakelisées, ou encore en toute autre matériau de faible conductivité thermique.

La partie arrière du corps (6) de la vanne (5) présente une cavité cylindrique (25) dans laquelle est logé un système d'accouplement (41) de l'arbre (2) de l'actionneur avec l'arbre de rotation (26) de l'obturateur (8) de la vanne.

L'arbre (2) de l'actionneur et l'arbre (26) de l'obturateur sont alignés et coaxiaux. Leurs extrémités frontales sont décalées longitudinalement pour réserver un espace d'air limitant la conduction thermique entre les deux arbres (2, 26).

L'accouplement entre les extrémités des deux arbres (2, 26) est assuré par la coopération entre une première pièce (29) fixée à l'extrémité de l'un desdites arbres (2), engagée dans une rainure diamétrale formée dans une seconde pièce (30) complémentaire fixée à l'extrémité de l'autre desdites arbres. La première pièce (29) et/ou la seconde pièce (30) sont réalisées en un matériau isolant thermiquement.

La seconde pièce (30) présente une forme de coupe dont le fond présente une section transversale inscrite dans un diamètre au moins deux fois supérieur, et typiquement trois fois supérieur, au diamètre de l'arbre de rotation de la vanne (26). La seconde pièce présente une rainure transversale pour permettre l'accouplement de la première pièce (29).

Le fond de la seconde pièce (30) permet de faire écran à la remontée des gaz chauds vers l'actionneur. La forme de coupe permet de conférer une compacité à la vanne tout en limitant le transfert de gaz chauds et en assurant une bonne liaison mécanique.

L'accouplement peut aussi être réalisé par un joint d'Oldham, utilisé de manière inhabituelle pour deux axes quasiment alignés et non pas fortement décalés.

Ce mode d'accouplement prévoyant une pièce engagée dans une rainure complémentaire permet d'absorber de faibles décalages axiaux entre les deux arbres (2, 26) et surtout d'isoler thermiquement les deux arbres.

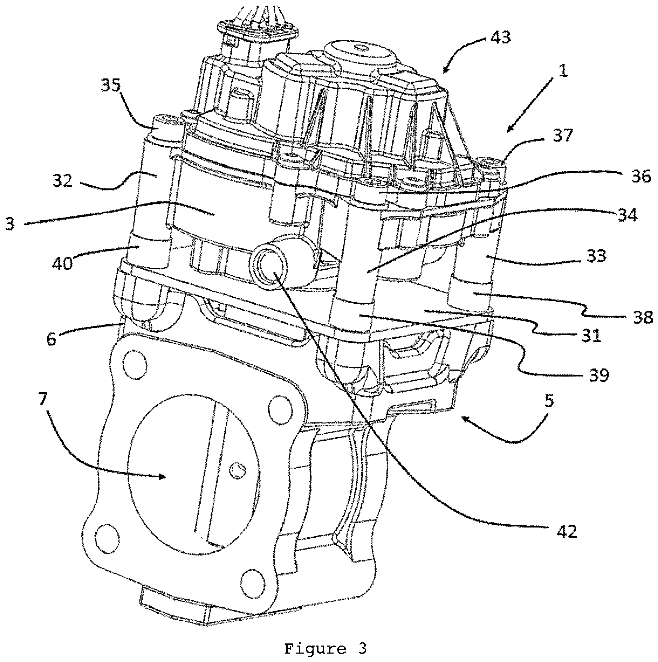

La figure 3 représente une variante de réalisation se distinguant par la présente d'une plaque (31) formée par une tôle fine placée entre la vanne (5) et l'actionneur (1).

Le corps avant (3) de l'actionneur (1) présente des colonnes (32 à 34) cylindriques traversées par vis (35 à 37) assurant la liaison avec le corps (6) de la vanne. Des entretoises isolantes thermiquement (38 à 40) sont interposées entre l'extrémité des colonnes (32 à 34) et la tôle (31).

La tôle (31) est constituée de deux feuilles métalliques séparées par une lame d'air. Elle réfléchit le rayonnement thermique émis par la vanne (5). Elle est percée par une lumière pour le passage de l'arbre (2) de l'actionneur.

Elle peut être légèrement incurvée pour former un bouclier thermique concave, vu du côté de la vanne (5).

Dans cet exemple de réalisation, l'actionneur (1) comporte :
- un corps inférieur (3) métallique, avec un circuit de refroidissement débouchant sur un embout (42), et
- un corps supérieur (43) en un matériau faiblement conducteur thermiquement, par exemple une matière plastique.

Ce corps supérieur faiblement conducteur thermiquement permet de limiter la transmission thermique résiduelle entre l'arbre (2) et l'actionneur, et notamment le circuit électronique équipant l'actionneur.

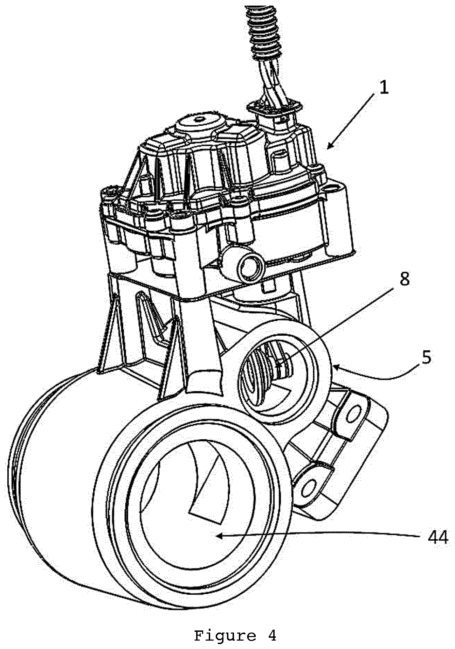

La figure 4 présente un autre mode de réalisation spécifiquement dédié à une vanne de décharge d'un conduit principal (44), aussi communément appelé « waste-gate ». On y retrouve les éléments constitutifs de l'invention avec notamment l'actionneur (1) qui déplace en rotation un organe d'obturation (8), régulant l'ouverture de la vanne (5) servant de conduit de diversion du fluide chaud du conduit principal (44).

## Revendications

1. Vanne de circulation de fluides chauds électro-commandée constituée d'un actionneur électromagnétique (1) et d'une vanne (5), ladite vanne (5) présentant un orifice (7) muni d'un organe d'obturation (8) mobile entraîné par un arbre (26) de rotation perpendiculaire à l'axe dudit orifice, ledit actionneur électromagnétique (1) entraînant la rotation dudit arbre (26), l'arbre de sortie (2) dudit actionneur (1) étant sensiblement coaxial avec ledit arbre de rotation (26), l'extrémité frontale de l'arbre de rotation (26) et l'extrémité frontale de l' arbre de sortie (2) ne sont pas en contact direct, l'accouplement entre ledit arbre de rotation (26) de la vanne et ledit arbre de sortie (2) de l'actionneur est assuré par un organe d'accouplement (41) placé entre l'extrémité frontale dudit arbre de sortie (2) et l'extrémité frontale dudit arbre (26), ledit organe d'accouplement (41) présentant des moyens de transmission de couple de rotation avec une tolérance de désalignement entre l'arbre de sortie (2) d'une part et l'arbre de rotation de la vanne (26) d'autre part, ladite vanne étant **caractérisée par** des moyens de liaison mécaniques (19 à 21 ; 38 à 40 ; 22 à 24) isolants thermiquement entre des zones périphériques du corps de l'actionneur et le corps de la vanne, et en ce que l'organe d'accouplement (41) est constitué d'une première pièce (29) fixée à l'extrémité de l'un desdites arbres (2), engagée dans une rainure transversale formée dans une seconde pièce (30) complémentaire fixée à l'extrémité de l'autre desdites arbres (26), ladite seconde pièce (30) ayant une section transversale pleine.

2. Vanne électro-commandée selon la revendication 1 **caractérisée en ce que** ladite première pièce (29) et/ou ladite seconde pièce (30) sont réalisées en un matériau isolant thermiquement et la seconde pièce (30) présente une section inscrite dans un diamètre au moins deux fois supérieur à celui de l'arbre de rotation (26), typiquement trois fois supérieur.

3. Vanne électro-commandée selon la revendication 2 **caractérisée en ce que** la seconde pièce présente une forme extérieure circulaire.

4. Vanne électro-commandée selon la revendication 1 **caractérisée en ce que** ledit organe d'accouplement (41) est réalisé au moins en partie en un matériau de faible conductivité thermique.

5. Vanne électro-commandée selon l'une des revendications 1 à 4 **caractérisée en ce qu'**elle comporte au moins une tôle (31) placée entre la surface frontale de la vanne (5) et la surface frontale de l'actionneur (1).

6. Vanne électro-commandée selon la revendication 5 **caractérisée en ce qu'**elle comporte au moins deux tôles (31) séparées par une lame d'isolant, placées entre la surface frontale de la vanne et la surface frontale de l'actionneur.

7. Vanne électro-commandée selon la revendication 1 **caractérisée en ce que** ledit organe d'accouplement (41) est réalisé en partie en acier inoxydable.

8. Vanne électro-commandée selon la revendication 1 **caractérisée en ce que** ledit organe d'accouplement (41) est réalisé au moins en partie en céramique.

9. Vanne électro-commandée selon la revendication 1 **caractérisée en ce que** ledit organe d'accouplement (41) est un joint de Oldham.

10. Vanne électro-commandée selon la revendication 1 **caractérisée en ce que** l'actionneur présente au moins trois zones de liaison périphériques pour la fixation sur la vanne.

11. Vanne électro-commandée selon la revendication 1 **caractérisée en ce que** ledit organe d'accouplement présente une surface discale de déflexion dirigée vers la surface frontale de la vanne.

## Patentansprüche

1. Elektrisch gesteuertes Umlaufventil für heiße Fluide, das aus einem elektromagnetischen Aktuator (1) und einem Ventil (5) besteht, wobei das Ventil (5) eine Öffnung (7) aufweist, die mit einem beweglichen Absperrorgan (8) versehen ist, das von einer senkrecht zur Achse der Öffnung verlaufenden Drehwelle (26) angetrieben wird, wobei der elektromagnetische Aktuator (1) die Welle (26) in Drehung versetzt und die Abtriebswelle (2) des Aktuators (1) im Wesentlichen koaxial zu der Drehwelle (26) ist, wobei das vordere Ende der Drehwelle (26) und das vordere Ende der Abtriebswelle (2) nicht in direktem Kontakt sind, wobei die Kupplung zwischen der Ventil-Drehwelle (26) und der Aktuator-Abtriebswelle (2) durch ein Kupplungselement (41) bereitgestellt wird, das zwischen dem vorderen Ende der Abtriebswelle (2) und dem vorderen Ende der Welle (26) angeordnet ist, wobei das Kupplungselement (41) Mittel zur Übertragung eines Drehmoments mit einer Ausrichtungsfehlertoleranz zwischen der Abtriebswelle (2) einerseits und der Drehwelle des Ventils (26) andererseits aufweist, wobei das Ventil durch mechanische, thermisch isolierende Verbindungsmittel (19 bis 21; 38 bis 40; 22 bis 24) zwischen peripheren Bereichen des Aktuatorkörpers und des Ventilkörpers gekennzeichnet ist, und dass das Kupplungsorgan (41) aus einem ersten Teil (29) besteht, das am Ende einer der Wellen (2) befestigt ist und in eine Quernut eingreift, die in einem komplementären zweiten Teil (30) ausgebildet ist, das am Ende der anderen der Wellen (26) befestigt ist, wobei das zweite Teil (30) einen massiven Querschnitt aufweist.

2. Elektrisch gesteuertes Ventil nach Anspruch 1, **dadurch gekennzeichnet, dass** der erste Teil (29) und/oder der zweite Teil (30) aus einem thermisch isolierenden Material hergestellt sind und der zweite Teil (30) einen Abschnitt aufweist, der einem Durchmesser einbeschrieben ist, der mindestens doppelt so groß ist wie der Durchmesser der Drehwelle (26), in der Regel dreimal so groß wie der Durchmesser der Drehwelle (26).

3. Elektrisch gesteuertes Ventil nach Anspruch 2, **dadurch gekennzeichnet, dass** der zweite Teil eine kreisförmige Außenform besitzt.

4. Elektrisch gesteuertes Ventil nach Anspruch 1, **dadurch gekennzeichnet, dass** das Kupplungselement (41) zumindest teilweise aus einem Material mit niedriger Wärmeleitfähigkeit hergestellt ist.

5. Elektrisch gesteuertes Ventil nach einem der Ansprüche 1 bis 4, **dadurch gekennzeichnet, dass** es mindestens eine Platte (31) aufweist, die zwischen der Frontfläche des Ventils (5) und der Frontfläche des Aktuators (1) angeordnet ist.

6. Elektrisch gesteuertes Ventil nach Anspruch 5, **dadurch gekennzeichnet, dass** es mindestens zwei durch einen Isolierstreifen getrennte Platten (31) umfasst, die zwischen der Frontfläche des Ventils und der Frontfläche des Aktuators angeordnet sind.

7. Elektrisch gesteuertes Ventil nach Anspruch 1, **dadurch gekennzeichnet, dass** das Kupplungselement (41) teilweise aus rostfreiem Stahl hergestellt ist.

8. Elektrisch gesteuertes Ventil nach Anspruch 1, **dadurch gekennzeichnet, dass** das Kupplungselement (41) zumindest teilweise aus Keramik hergestellt ist.

9. Elektrisch gesteuertes Ventil nach Anspruch 1, **dadurch gekennzeichnet, dass** das Kupplungselement (41) eine Oldham-Kupplung ist.

10. Elektrisch gesteuertes Ventil nach Anspruch 1, **dadurch gekennzeichnet, dass** der Aktuator mindestens drei periphere Anschlussbereiche zum Anschluss an das Ventil aufweist.

11. Elektrisch gesteuertes Ventil nach Anspruch 1, **dadurch gekennzeichnet, dass** das Kupplungselement eine zur Frontfläche des Ventils gerichtete Ablenk-Scheibenfläche aufweist.

## Claims

1. Electrically controlled hot fluid circulation valve consisting of an electromagnetic actuator (1) and a valve (5), said valve (5) having an orifice (7) provided with a movable closure member (8) driven by a rotation shaft (26) perpendicular to the axis of said orifice, said electromagnetic actuator (1) causing said shaft (26) to rotate, the output shaft (2) of said actuator (1) being substantially coaxial with said rotation shaft (26), the front end of the rotation shaft (26) and the front end of the output shaft (2) not being in direct contact, the coupling between said rotation shaft (26) of the valve and said output shaft (2) of the actuator being provided by a coupling member (41) placed between the front end of said output shaft (2) and the front end of said shaft (26), said coupling member (41) having means for transmitting torque with a tolerance for misalignment between the output shaft (2) on the one hand and the valve rotation shaft (26) on the other hand, said valve being **characterized by** thermally insulating mechanical connections (19-21; 38-40; 22-24) between the peripheral zones of the actuator body and the valve body, and in that the coupling member (41) consists of a first part (29) fixed to the end of one of said shafts (2), seated in a transverse groove formed in a second complementary piece (30) fixed to the end of the other of said shafts (26), said second piece (30) having a full cross section.

2. Electrically controlled valve according to claim 1 **characterized in that** said first part (29) and/or said second part (30) are made of a thermally insulating material and the cross section of the second part (30) has a diameter at least twice as large as that of the rotation shaft (26), typically three times greater.

3. Electrically controlled valve according to claim 2 **characterized in that** the second part has a circular external shape.

4. Electrically controlled valve according to claim 1 **characterized in that** said coupling member (41) is made at least in part of a material with low thermal conductivity.

5. Electrically controlled valve according to one of claims 1 to 4 **characterized in that** it comprises at least one metal sheet (31) placed between the front surface of the valve (5) and the front surface of the actuator (1).

6. Electrically controlled valve according to claim 5 **characterized in that** it comprises at least two metal sheets (31) separated by an insulating strip, placed between the front surface of the valve and the front surface of the actuator.

7. Electrically controlled valve according to claim 1 **characterized in that** said coupling member (41) is made partly of stainless steel.

8. Electrically controlled valve according to claim 1 **characterized in that** said coupling member (41) is made at least partly of ceramic.

9. Electrically controlled valve according to claim 1 **characterized in that** said coupling member (41) is an Oldham coupling.

10. Electrically controlled valve according to claim 1 **characterized in that** the actuator has at least three peripheral connection zones for attachment to the valve.

11. Electrically controlled valve according to claim 1 **characterized in that** said coupling member has a deflection disc surface pointed towards the front surface of the valve.
